# EUROPEAN PATENT APPLICATION

(11) **EP 4 852 210 A1**
(43) Date of publication of application: **09.12.2026**
(21) Application number: 26178859.0
(22) Date of filing: 15.05.2026
(51) Int. Cl.: H01M 50/593

(54) **INSULATOR, SECONDARY BATTERY INCLUDING INSULATOR, AND METHOD OF MANUFACTURING SECONDARY BATTERY INCLUDING INSULATOR**

(30) Priority: 05.06.2025 KR 20250073830
(71) Applicant: SAMSUNG SDI CO., LTD., Yongin-si, Gyeonggi-do 17084 (KR)
(72) Inventor: LEE, Juhyeon, 17084 Yongin-si (KR); LEE, Youngjin, 17084 Yongin-Si (KR); JEON, Duseong, 17084 Yongin-si (KR); CHAE, Heedong, 17084 Yongin-si (KR)
(74) Representative: Maiwald GmbH

(57) **Abstract**

An insulator includes a base part coupled with a cap assembly, and a plurality of sidewalls bent downwardly from the base part and extending, in which an electrode tab is received inside, and at least one of the sidewalls includes a recess in a longitudinal direction.

## Description

### FIELD

The present disclosure relates to an insulator, to a secondary battery including an insulator, and to a method of manufacturing a secondary battery including an insulator.

### BACKGROUND

A battery is a rechargeable battery and refers to a battery that may be charged and discharged multiple times. Such secondary batteries are mainly used in various application fields such as electronic products (smartphones, laptops, tablets, etc.), electric vehicles, solar power generation, and emergency power supply devices. In particular, lithium-ion batteries are used in various electronic products and electric vehicles because lithium-ion batteries have high energy density and high charge/discharge efficiency.

Secondary batteries may be classified into cylindrical secondary batteries, prismatic secondary batteries, and pouch-type secondary batteries according to a shape of a case. A prismatic secondary battery has a structure in which an electrode assembly is embedded in a prismatic metal can. The electrode assembly is inserted into the prismatic metal can, and a cap plate is welded to seal the can.

The herein information disclosed in this Background section is for enhancement of understanding of the background of the present disclosure, and therefore, it may contain information that does not constitute related (or prior) art.

### SUMMARY

An insulator according to embodiments of the present disclosure includes a base part coupled with a cap assembly, and a plurality of sidewalls bent downwardly and extending from the base part, in which an electrode tab is received inside, and at least one of the sidewalls includes a recess in a longitudinal direction.

A secondary battery according to embodiments of the present disclosure includes an electrode assembly accommodated in a case and including a plurality of electrode tabs, a cap assembly sealing an open surface of the case, a current collector coupled to the cap assembly, and an insulator interposed between the current collector and the electrode assembly, wherein the insulator includes a base part coupled with the cap assembly, and a plurality of sidewalls bent downwardly and extending from the base part, in which an electrode tab is received inside, and at least one of the sidewalls includes a recess in a longitudinal direction.

A manufacturing method of a secondary battery according to embodiments of the present disclosure includes first bending an electrode tab in a first direction with a first pin, secondarily bending a portion of the electrode tab in a second direction substantially opposite to the first direction with a second pin, and lowering an insulator to be positioned on an upper side of the first pin, wherein the insulator includes a base part coupled with a cap assembly and a plurality of sidewalls bent downwardly and extending from the base part, in which the electrode tab is received inside, and at least one of the sidewalls includes a recess in a third direction substantially perpendicular to the first direction and the second direction.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings.
FIG. 1 is a perspective view of an example of a battery cell 100 according to embodiments of the present disclosure.
FIG. 2 is a perspective view of an insulator 240 according to embodiments of the present disclosure.
FIG. 3 is a cross-sectional view of a secondary battery according to embodiments of the present disclosure, cut in a Y-axis direction.
FIG. 4 is a cross-sectional view of a secondary battery according to embodiments of the present disclosure, cut in a Y-axis direction.
FIG. 5 is a cross-sectional view of a secondary battery according to embodiments of the present disclosure, cut in a Y-axis direction.
FIG. 6 is a perspective view of an insulator 640 according to embodiments of the present disclosure.
FIG. 7 is a cross-sectional view of a secondary battery according to embodiments of the present disclosure, cut in a Y-axis direction.
FIG. 8 is a cross-sectional view of an electrode tab 830 and an insulator 840 according to embodiments of the present disclosure, cut in an X-axis direction.
FIG. 9 is a cross-sectional view of an electrode tab 930 and an insulator 940 according to embodiments of the present disclosure, cut in an X-axis direction.
FIG. 10 is a flowchart of a manufacturing method of a secondary battery according to embodiments of the present disclosure.
FIGS. 11 to 13 are diagrams of each step of a manufacturing method of a secondary battery according to embodiments of the present disclosure.

### DETAILED DESCRIPTION

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her disclosure in the best way.

The embodiments described in this specification and the configurations shown in the drawings are only some of the embodiments of the present disclosure and do not represent all of the technical spirit, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed herein could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to one another, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

The terms used in this specification are for describing embodiments of the present disclosure and are not intended to limit the present disclosure.

A problem to be solved by the present disclosure is to provide an insulator and a secondary battery including the same to solve the problems as described herein.

However, the technical problem to be solved by the present disclosure is not limited to the problems described herein, and other problems not mentioned herein, and aspects and features of the present disclosure that would address such problems, will be clearly understood by those skilled in the art from the description of the present disclosure herein.

According to various embodiments of the present disclosure, as the insulator having the recess formed therein is positioned on the electrode tab, the electrode tab may be controlled so as not to protrude to an outside of the electrode assembly or the insulator. By this configuration, it is possible to prevent contact with an adjacent member and occurrence of a short circuit of the battery due to protrusion of the electrode tab.

According to various embodiments of the present disclosure, as the insulator having the recess formed therein is positioned on the electrode tab, a process of taping the protruded electrode tab may be omitted and a manufacturing process of the battery may be simplified.

According to various embodiments of the present disclosure, as the insulator having a gradient on a lower surface is arranged, a thickness of the insulator may be reduced, and an internal space of the secondary battery may be secured.

However, aspects and features of the present disclosure are not limited to those described herein, and other aspects and features not mentioned will be clearly understood by a person skilled in the art from the detailed description, described herein.

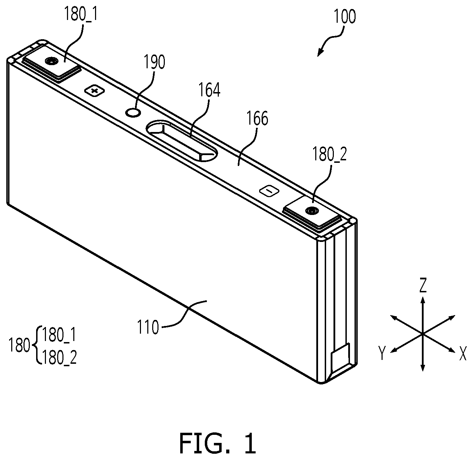

FIG. 1 is a perspective view of an example of a battery cell 100 according to embodiments of the present disclosure.

Referring to FIG. 1, the battery cell 100 may include at least one or more electrode assemblies wound or stacked with a separator, which is an insulator, interposed between a positive electrode and a negative electrode, a case 110 in which the electrode assembly is embedded, and a cap plate 166 coupled to an open end of the case 110. The battery cell 100 shown in FIG. 1 may be a type of secondary battery.

The positive electrode and the negative electrode may include a coating part, which is a region where an active material is applied to a current collector formed of a thin metal foil, and a non-coating part, which is a region where the active material is not coated.

The positive electrode and the negative electrode are wound after interposing the separator, which is an insulator, therebetween. However, the present disclosure is not limited thereto, and the electrode assembly may have a structure in which positive electrodes and negative electrodes consisting of a plurality of sheets are alternately stacked with separators therebetween.

The case 110 forms the overall appearance of the battery cell 100 and may be formed of a conductive metal such as aluminum, an aluminum alloy, or nickel-plated steel. In addition, the case 110 may provide a space in which the electrode assembly is accommodated. In FIG. 1, the case 110 is a prismatic case, and the battery cell 100 is illustrated as being a prismatic battery cell, but the scope of the present disclosure is not limited thereto. The battery cell 100 may be a battery cell of any shape such as prismatic, cylindrical, or pouch-type.

The cap plate 166 is coupled with an open end of the case 110 to seal the case 110. The case 110 and the cap plate 166 may be made of a conductive material. According to embodiments, a top of the case 110 may be open, and the cap plate 166 may seal the open top of the case 110.

A positive electrode terminal 180_1 electrically connected to the positive electrode and a negative electrode terminal 180_2 electrically connected to the negative electrode may be coupled to the cap plate 166. For example, the positive electrode and negative electrode terminals 180_1, 180_2 may be installed to penetrate the cap plate 166 and protrude to the outside.

According to embodiments, a vent part 164 may be positioned on at least one surface of the battery cell 100 (for example, in the illustrated example, a top surface of the battery cell 100, that is, the cap plate 166). The vent part 164 may be configured to open when an internal pressure of greater than or equal to a predetermined threshold pressure is detected in the battery cell 100.

At this time, the threshold pressure may be set differently depending on an application field, material, purpose, etc. of the battery. For example, in a case of a battery in which a charge-discharge cycle is short during use and the internal pressure of the case 110 maintains a high pressure on average compared to other application fields, a relatively high threshold pressure may be set. In another example, a relatively high threshold pressure may be set for a battery manufactured with a material and/or design having relatively high heat resistance and/or pressure resistance. In contrast, a relatively low threshold pressure may be set in a battery manufactured with a material and/or design having relatively low heat resistance and/or pressure resistance. In embodiments, the vent part 164 may be configured to open when an internal temperature exceeds a predetermined threshold temperature. Through this configuration, the vent part 164 may prevent explosion of the battery cell 100 or prevent a chain exothermic reaction of other battery cells arranged around the battery cell 100.

In embodiments, the cap plate 166 may include an electrolyte injection hole 190. For example, the electrolyte injection hole 190 may be a through-hole in the cap plate 166, and may be to inject an electrolyte into the case 110 after the cap plate 166 is coupled to an opening of the case 110 and sealed. The electrolyte injection hole 190 may be sealed with a sealing member after the electrolyte is injected.

The battery cell 100 may be a lithium battery cell, a sodium battery cell, or the like. However, the scope of the present disclosure is not limited thereto, and the battery cell 100 includes all batteries that can repeatedly provide electricity by charging and discharging. In embodiments, when the battery cell 100 is a lithium battery cell, since it has excellent life characteristics and high rate characteristics, it may be used in an electric vehicle (EV). For example, it may be used in a hybrid vehicle such as a plug-in hybrid electric vehicle (PHEV). In addition, lithium battery cells may be used in fields requiring storage of a large amount of power. For example, they may be used in electric bicycles, electric tools, etc.

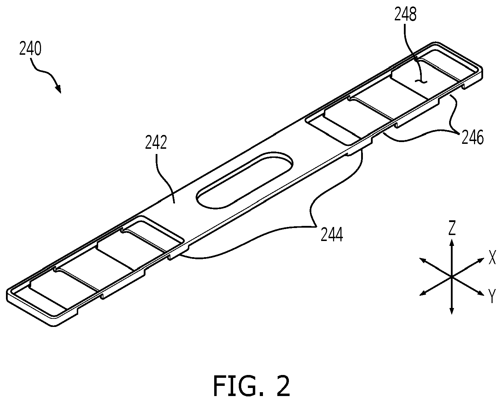

FIG. 2 is a perspective view of an insulator 240 according to embodiments of the present disclosure.

In embodiments, the insulator 240 may include a base part 242 coupled with a cap assembly and a plurality of sidewalls 244 bent downwardly and extending from the base part 242. The insulator 240 may be positioned on an upper side of the electrode assembly. An electrode tab of the electrode assembly may be positioned on a lower side of the insulator 240. In embodiments, the electrode tab of the electrode assembly may be received inside the plurality of sidewalls 244.

In embodiments, the insulator 240 may include the base part 242. The base part 242 of the insulator 240 may be coupled with the cap assembly. The base part 242 of the insulator 240 may be in contact with a current collector coupled to the cap assembly. In embodiments, the base part 242 may include at least one opening 248 exposing a portion of the electrode tab. The electrode tab may be coupled with the current collector through the at least one opening 248 in the insulator 240. For example, the electrode tab and the current collector may be electrically connected by contacting one another through the at least one opening 248.

In embodiments, the insulator 240 may include the plurality of sidewalls 244 bent downwardly and extending from the base part 242. The electrode tab of the electrode assembly located on the lower side of the insulator 240 may be located inside the plurality of sidewalls 244. For example, the plurality of sidewalls 244 may be positioned along an outer periphery of the insulator 240 and form a space inside where the electrode tab may be received.

At least one of the plurality of sidewalls 244 may include a recess 246 in a longitudinal direction. Referring to FIG. 2, the longitudinal direction may refer to an X-axis direction. The longitudinal direction may be a direction perpendicular to a stacking direction of the electrode assembly. Sidewalls 244 facing one another among the plurality of sidewalls 244 may each include the recess 246. For example, the recesses 246 may be at positions corresponding to one another based on a thickness direction. The thickness direction may refer to a Y-axis direction. The thickness direction may be perpendicular to the longitudinal direction. The recess 246 may be at a position corresponding to the opening 248. Since the recess 246 is at the position corresponding to the opening 248, it may perform a function of a movement passage for a pin for bending the electrode tab.

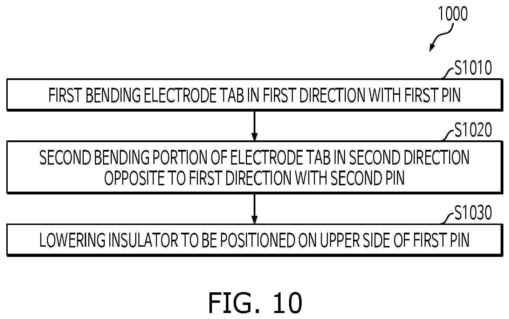

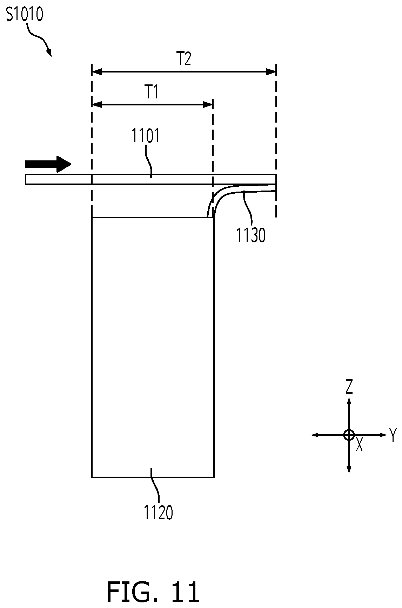

In embodiments, a width of the recess 246 may be greater than a width of the electrode tab. In embodiments, the width of the recess 246 may be less than the width of the electrode tab. The herein-described embodiments will be described later in detail with reference to FIGS. 10 and 11.

In embodiments, the electrode assembly may be positioned on the lower side of the insulator 240. For example, the insulator 240 may be in contact with the electrode tab of the electrode assembly. The electrode tab may be positioned inside the insulator 240. For example, the electrode tab may be positioned inside the plurality of sidewalls 244 of the insulator 240. The electrode tab may be received within the plurality of sidewalls 244 without protruding to the outside of the electrode assembly or the insulator 240.

In embodiments, the electrode tab positioned inside the plurality of sidewalls 244 may be a bent electrode tab. For example, the electrode tab may be bent in a first direction (+Y-axis direction), and a portion of the electrode tab may be bent in a second direction (-Y-axis direction) opposite to the first direction. However, the present disclosure is not limited thereto. For example, if the electrode tab is received within the plurality of sidewalls 244, the structure, shape, etc., of the electrode tab are not limited to the herein-described embodiment and may be modified into various forms.

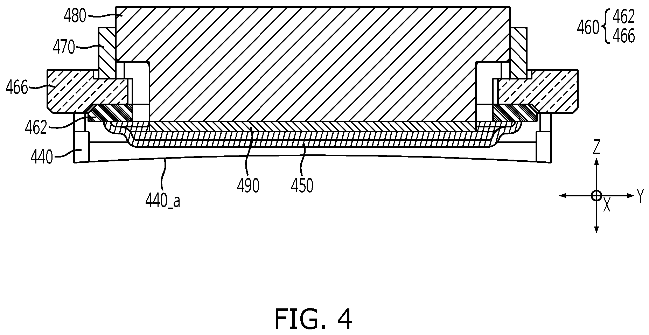

In embodiments, a lower surface of the base part 242 of the insulator 240 may have a gradient. The structure in which the gradient is on the lower surface of the base part 242 will be described later in detail with reference to FIG. 4.

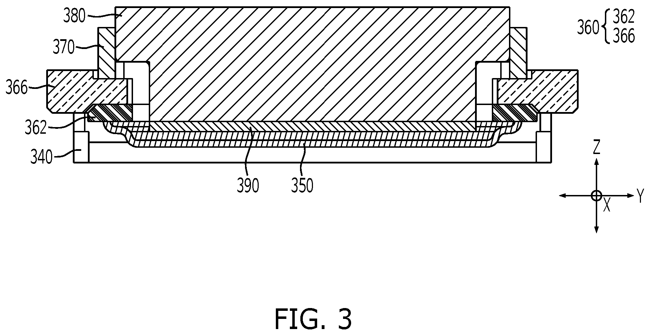

FIG. 3 is a cross-sectional view of a secondary battery according to embodiments of the present disclosure, cut in a Y-axis direction. FIG. 3 may be a cross-sectional view of a part where a recess is on a sidewall of an insulator 340, cut in the Y-axis direction.

An electrode assembly (not shown) may be positioned on a lower side of the insulator 340 shown in FIG. 3. In embodiments, the electrode assembly may be accommodated inside a case with an open top. The electrode assembly may be formed by winding or stacking a stack of a first electrode plate (not shown) in a thin plate or film shape, a separator (not shown), and a second electrode plate (not shown). When the electrode assembly is a wound stack, a winding axis may be parallel to a longitudinal direction of the case. In addition, the electrode assembly may be a stack type rather than a winding type, and the shape of the electrode assembly is not limited in the present disclosure. In addition, the electrode assembly may be a Z-stack electrode assembly in which a positive electrode plate and a negative electrode plate are inserted into both sides of a separator bent in a Z-stack. In addition, one or more electrode assemblies may be stacked so that long sides are adjacent to one another and accommodated inside the case, and the number of electrode assemblies is not limited in the present disclosure. The first electrode plate of the electrode assembly may serve as a positive electrode, and the second electrode plate may serve as a negative electrode. Of course, the opposite is also possible.

The electrode assembly positioned on the lower side of the insulator 340 may include a plurality of electrode tabs. The electrode tabs may be positioned in a region where an active material is not applied. The electrode tabs may be coupled in a state where the plurality of electrode tabs are gathered in an upper region of the electrode assembly.

The electrode tab of the electrode assembly may be connected with a current collector 350. The electrode tab may be connected with the current collector 350 through the insulator 340. In embodiments, the insulator 340 includes at least one opening exposing a portion of the electrode tab, and the electrode tab and the current collector 350 may be coupled through the at least one opening in the insulator 340. For example, the electrode tab and the current collector 350 are fixed by metal joining, and a metal joining region may be on the electrode tab and the current collector 350. The electrode tab and the current collector 350 may be electrically connected.

A first insulating member 362 may be positioned on an upper side of the current collector 350. In embodiments, the first insulating member 362 may be interposed between the current collector 350 and a cap plate 366. Since the first insulating member 362 is interposed between the current collector 350 and the cap plate 366, the current collector 350 and the cap plate 366 may not be electrically connected.

In embodiments, the cap plate 366 seals an opening of the case accommodating the electrode assembly and may be provided of the same material as the case. The cap plate 366 may be coupled to the case by metal joining (e.g., welding).

In embodiments, a cap assembly 360 may be coupled with a base part of the insulator 340. The cap assembly 360 may include the first insulating member 362 and the cap plate 366. The cap assembly 360 may be coupled with the current collector 350 through the first insulating member 362. The cap assembly 360 coupled with the current collector 350 may be coupled with the base part of the insulator 340.

The cap plate 366 may include at least one through-part. The through-part in the cap plate 366 may be a configuration for connecting a terminal 380 protruding to an outside of the cap plate 366 and the electrode tab. For example, the terminal 380 may be electrically connected to the electrode tab by penetrating the through-part of the cap plate 366 and being connected to the current collector 350. In embodiments, the terminal 380 and the current collector 350 are fixed by metal joining, and a metal joining region (e.g., a welding region) may be on the terminal 380 and the current collector 350.

In embodiments, a second insulating member 370 may be positioned on an upper side of the cap plate 366. The second insulating member 370 may be a configuration for fixing and insulating the terminal 380 in the through-part of the cap plate 366. The terminal 380 may be coupled on the second insulating member 370. For example, the second insulating member 370 may be interposed between the terminal 380 and the cap plate 366. Since the second insulating member 370 is interposed between the terminal 380 and the cap plate 366, the terminal 380 and the cap plate 366 may not be electrically connected. The second insulating member 370 may be configured in a penetrated form (e.g., an angular ring form) so that the terminal 380 may be inserted.

The terminal 380 may consist of a positive electrode terminal electrically connected to the positive electrode and a negative electrode terminal electrically connected to the negative electrode. The terminal 380 may be coupled with the cap plate 366 through the second insulating member 370. The terminal 380 may be installed to penetrate the cap plate 366 and protrude to an outside of the case. In addition, the terminal 380 may penetrate from the cap plate 366 in a direction toward an inside of the case. The terminal 380 may have a thickness thicker than a thickness of the cap plate 366 to penetrate the cap plate 366. The terminal 380 penetrating in the direction toward the inside of the case may be connected with the current collector 350. The terminal 380 and the current collector 350 are fixed by metal joining, and a metal joining region 390 may be on the terminal 380 and the current collector 350. As the terminal 380 and the current collector 350 are fixed by metal joining, structural stability may be secured.

FIG. 4 is a cross-sectional view of a secondary battery according to embodiments of the present disclosure, cut in a Y-axis direction. FIG. 4 may be a cross-sectional view of a part where a recess is on a sidewall of an insulator 440, cut in the Y-axis direction. In FIG. 4, descriptions overlapping with the contents described in FIG. 3 will be omitted.

The insulator 440 may include a base part and a plurality of sidewalls bent downwardly and extending from the base part. In embodiments, a lower surface of the base part may have a gradient 440_a. In FIG. 4, the lower surface of the base part is illustrated as having the gradient 440_a in the Y-axis direction, but is not limited thereto. For example, the lower surface of the base part may have a gradient in the X-axis direction. Since the lower surface of the base part has the gradient 440_a, a thickness of the insulator 440 is reduced, and through this, an internal space of the secondary battery may be secured.

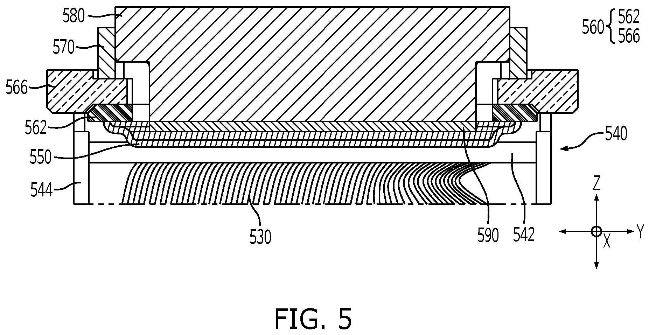

FIG. 5 is a cross-sectional view of a secondary battery according to embodiments of the present disclosure, cut in a Y-axis direction. FIG. 5 may be a cross-sectional view of a part where a recess is not on a sidewall of an insulator 540, cut in the Y-axis direction. In FIG. 5, descriptions overlapping with the contents described in FIGS. 3 and 4 will be omitted.

In embodiments, the insulator 540 may be positioned on the electrode assembly. For example, the insulator 540 may be interposed between the electrode assembly and a current collector 550. The electrode assembly includes a plurality of electrode tabs 530, and the insulator 540 may be positioned on the plurality of electrode tabs 530. The plurality of electrode tabs 530 may be received inside the insulator 540. For example, the insulator 540 includes a plurality of sidewalls 544 bent downwardly and extending from the base part, and the plurality of electrode tabs 530 may be received inside the plurality of sidewalls 544.

In embodiments, the plurality of electrode tabs 530 may be in contact with the current collector 550. The insulator 540 includes a base part 542 coupled with a cap assembly 560, and the base part 542 may include at least one opening exposing a portion of the electrode tab 530. The electrode tab 530 and the current collector 550 may contact one another through the opening. For example, the electrode tab 530 and the current collector 550 are fixed by metal joining, and a first metal joining region (not shown) may be on the electrode tab 530 and the current collector 550. The electrode tab 530 and the current collector 550 may be electrically connected.

A terminal 580 may penetrate a through-part of a cap plate 566 and contact the current collector 550. For example, the terminal 580 is metal-joined with the current collector 550, and a second metal joining region 590 may be on the electrode tab 530 and the current collector 550. The current collector 550 and the terminal 580 are electrically connected, and the electrode tab 530 may be electrically connected to the terminal 580 through the current collector 550.

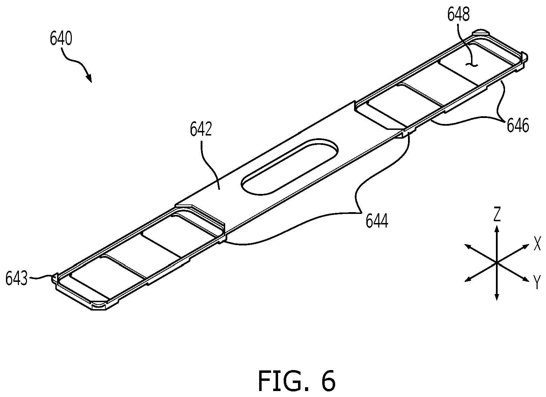

FIG. 6 is a perspective view of an insulator 640 according to embodiments of the present disclosure. In FIG. 6, descriptions overlapping with the contents described herein in FIG. 2 will be omitted.

The insulator 640 may include a base part 642 coupled with a cap assembly. For example, the base part 642 may be designed to be tightly coupled with a lower structure of the cap assembly. In embodiments, the insulator 640 may further include a fastening part 643. The fastening part 643 may be coupled with the cap assembly. For example, the fastening part 643 may be coupled with the cap assembly by being fastened with a cap plate. Structural stability may be maintained even in an environment where external impact or vibration occurs due to the coupling between the fastening part 643 and the cap plate.

An electrode tab on a lower side of the insulator 640 may be coupled with a current collector through at least one opening 648 in the base part 642. For example, the electrode tab and the current collector may be electrically connected by contacting one another through the at least one opening 648.

The insulator 640 includes a plurality of sidewalls 644 bent downwardly and extending from the base part 642. The plurality of sidewalls 644 may be positioned along an outer periphery of the insulator 640 and form a space inside where the electrode tab may be received. At least one of the plurality of sidewalls 644 may include a recess 646 in a longitudinal direction (X direction).

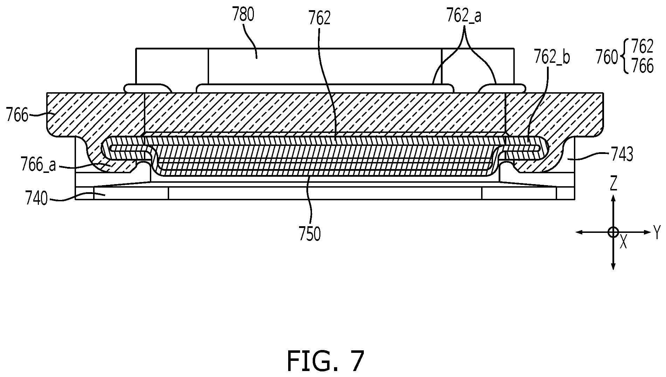

FIG. 7 is a cross-sectional view of a secondary battery according to embodiments of the present disclosure, cut in a Y-axis direction. FIG. 7 may be a cross-sectional view of a part where a recess is on an insulator 740, cut in the Y-axis direction. In FIG. 7, descriptions overlapping with the contents described herein in FIG. 3 will be omitted.

In embodiments, a base part of the insulator 740 may be designed to be tightly coupled with a lower structure of a cap assembly 760. For example, a shape of the base part may be designed to correspond to a current collector 750 and the lower structure of the cap assembly 760. In embodiments, the insulator 740 may further include a fastening part 743. The fastening part 743 may be coupled with the cap assembly 760. For example, the fastening part 743 of the insulator 740 may be coupled with the cap assembly 760 by being fastened with a cap plate 766. By this structure, mechanical strength against external impact or vibration may be secured.

In embodiments, the insulator 740 includes at least one opening exposing a portion of the electrode tab, and the electrode tab and the current collector 750 may be coupled through the at least one opening in the insulator 740. A structure of the current collector 750 shown in FIG. 7 may be different from a structure of the current collector shown in FIG. 3. For example, the structure of the current collector 750 may have a structure corresponding to the structure of the insulator 740 and a first insulating member 762 shown in FIG. 7.

The first insulating member 762 may be positioned on an upper side of the current collector 750. Since the first insulating member 762 is interposed between the current collector 750 and the cap plate 766, the current collector 750 and the cap plate 766 may not be electrically connected. A structure of the first insulating member 762 shown in FIG. 7 may be different from a structure of the first insulating member shown in FIG. 3. The first insulating member 762 may include a protrusion 762_a protruding in a direction in which the cap plate 766 and a terminal 780 are positioned. The protrusion 762_a may be positioned on the cap plate 766 by penetrating a through-part in the cap plate 766. For example, at least a portion of the protrusion 762_a may be positioned on the cap plate 766. The protrusion 762_a on the cap plate 766 may be a configuration for fixing and insulating the terminal 780 in the through-part of the cap plate 766. For example, the protrusion 762_a on the cap plate 766 may be configured in a penetrated form so that the terminal 780 may be inserted. By forming a gap between the terminal 780 and the cap plate 766, the protrusion 762_a may allow the terminal 780 and the cap plate 766 to be positioned spaced apart. By this structure, even if a separate second insulating member is not additionally positioned between the terminal 780 and the cap plate 766, the terminal 780 and the cap plate 766 may not be electrically connected.

In embodiments, the first insulating member 762 may include a first coupling part 762_b. The first coupling part 762_b may be coupled to both ends of the current collector 750. For example, the first coupling part 762_b may be coupled with the current collector 750 by including a structure bent in a form that surrounds at least a portion of both ends of the current collector 750.

In embodiments, the cap plate 766 may include a second coupling part 766_a. The second coupling part 766_a may be coupled with the first insulating member 762. For example, the second coupling part 766_a may have a structure bent in a form that surrounds at least a portion of the first coupling part 762_b of the first insulating member 762. The second coupling part 766_a of the cap plate 766 may be interposed between the fastening part 743 of the insulator 740 and the first coupling part 762_b of the first insulating member 762.

In embodiments, the cap plate 766 may include at least one through-part. The through-part in the cap plate 766 may be a configuration for connecting the terminal 780 protruding to the outside of the cap plate 766 and the current collector 750. A structure of the cap plate 766 shown in FIG. 7 may be different from the structure of the cap plate shown in FIG. 3. The through-part in the cap plate 766 may be coupled with the protrusion 762_a. For example, by having a structure corresponding to a shape and a position of the protrusion 762_a, the through-part may have the protrusion inserted or caught and coupled therein.

In embodiments, the terminal 780 may be coupled with the cap plate 766 through the protrusion 762_a of the first insulating member 762. The terminal 780 may be installed to penetrate the cap plate 766 and protrude to an outside of the case 810. The terminal 780 may contact the current collector 750 by penetrating the through-part of the cap plate 766. By contacting the current collector 750, the terminal 780 may be electrically connected to the current collector 750 and an electrode tab connected with the current collector 750. In embodiments, the terminal 780 and the current collector 750 are fixed by metal joining, and a metal joining region (not shown) may be on the terminal 780 and the current collector 750.

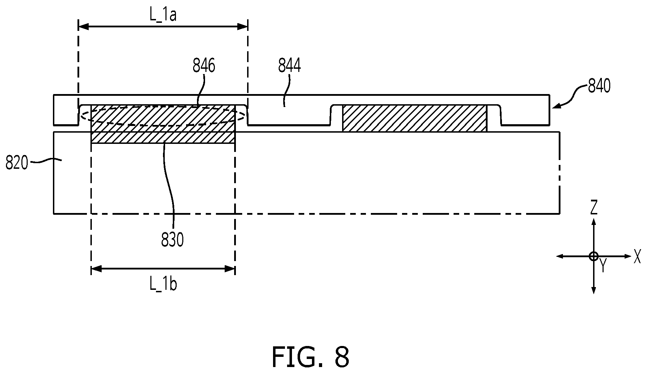

FIG. 8 is a cross-sectional view of an electrode tab and an insulator according to embodiments of the present disclosure, cut in an X-axis direction.

An insulator 840 may include a base part coupled with a cap assembly and a plurality of sidewalls 844 bent downwardly and extending from the base part. At least one of the plurality of sidewalls 844 may include a recess 846 in a longitudinal direction. The longitudinal direction may refer to an X-axis direction.

An electrode tab 830 of an electrode assembly 820 may be positioned on a lower side of the insulator 840. In embodiments, the electrode tab 830 may be received inside the plurality of sidewalls 844. For example, a width of the electrode tab 830 in a Y-axis direction may be shorter than an interval between two sidewalls 844 facing one another based on the Y-axis direction.

In embodiments, a width L_1a of the recess 846 may be greater than a width L_1b of the electrode tab 830. The width L_1a of the recess 846 may refer to a width of the recess 846 in an X-axis direction, and the width L_1b of the electrode tab 830 may refer to a width of the electrode tab 830 in the X-axis direction.

The electrode tab 830 received inside the insulator 840 may be a bent electrode tab 830. For example, the electrode tab 830 may be bent in a first direction (+Y-axis direction), and a portion of the electrode tab 830 may be bent in a second direction (-Y direction) opposite to the first direction. Bending the electrode tab 830 may include bending the electrode tab 830 in the first direction (+Y-axis direction) with a first pin and bending a portion of the electrode tab 830 in the second direction (-Y-axis direction) with a second pin. Thereafter, the insulator 840 may be lowered and positioned on the first pin. When removing the first pin or the second pin, the first pin or the second pin may retreat from the electrode tab 830 through the recess 846 of the insulator 840. A width of the first pin or the second pin in the X-axis direction may be less than the width L_1a of the recess 846. A method of bending the electrode tab 830 using the first pin and the second pin will be described later in detail with reference to FIGS. 10 to 13.

In embodiments, the width of the first pin or the second pin may be equal to the width L_1b of the electrode tab 830 or greater than the width L_1b of the electrode tab 830. By bending the electrode tab 830 using the first pin or the second pin having a width equal to or greater than the width L_1b of the electrode tab 830, a stress concentration phenomenon that may occur in the electrode tab 830 upon insertion of the first pin or the second pin may be alleviated.

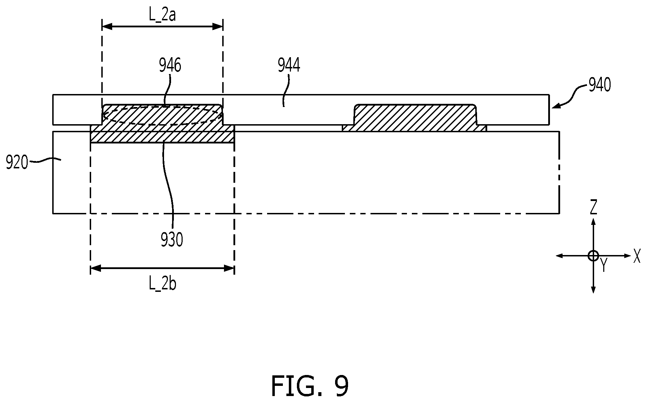

FIG. 9 is a cross-sectional view of an electrode tab and an insulator according to embodiments of the present disclosure, cut in an X-axis direction. In FIG. 9, descriptions overlapping with the contents described herein in FIG. 8 will be omitted.

In embodiments, a width L_2a of a recess 946 may be less than a width L_2b of an electrode tab 930. The width L_2a of the recess 946 may refer to a width of the recess 946 in an X-axis direction, and the width L_2b of the electrode tab 930 may refer to a width of the electrode tab 930 in the X-axis direction.

In embodiments, at least a portion of the electrode tab 930 may overlap with at least a portion of a sidewall 944 in a Y-axis direction. At least a portion of the sidewall 944 overlapping with at least a portion of the electrode tab 930 may prevent the electrode tab 930 from protruding to an outside of an electrode assembly 920 or an insulator 940.

FIG. 10 is a flowchart of a manufacturing method of a secondary battery according to embodiments of the present disclosure. FIGS. 11 to 13 are diagrams of a manufacturing method of a secondary battery according to embodiments of the present disclosure. FIGS. 11 to 13 are cross-sectional views of an electrode assembly and an insulator, cut in a Y-axis direction.

A manufacturing method of a secondary battery according to embodiments of the present disclosure may be initiated with first bending an electrode tab in a first direction with a first pin (S1010). Thereafter, a portion of the electrode tab may be secondarily bent in a second direction opposite to the first direction with a second pin (S1020). Thereafter, an insulator may be lowered and positioned on an upper side of the first pin (S1030). The insulator may include a base part coupled with a cap assembly and a plurality of sidewalls bent downwardly and extending from the base part, in which the electrode tab is received inside. At least one of the plurality of sidewalls includes a recess in a third direction perpendicular to the first direction and the second direction, and sidewalls facing one another among the plurality of sidewalls may each include the recess. Each step of the manufacturing method of the secondary battery will be described later in detail with reference to FIGS. 11 to 13.

In embodiments, the first pin retreating from the electrode tab through the recess may be further included. A width of the first pin may be less than a width of the recess. In embodiments, the second pin retreating from the electrode tab through the recess may be further included. A width of the second pin may be less than the width of the recess. In embodiments, after the first pin and the second pin have retreated, the insulator may be additionally lowered so that the electrode tab on a lower side of the insulator may be additionally bent.

Referring to FIG. 11, an electrode tab 1130 of an electrode assembly 1120 may be first bent in a first direction (+Y-axis direction) with a first pin 1101 (S1010). In FIG. 11, the electrode tab 1130 is illustrated as being singular, but is not limited thereto. For example, the electrode assembly 1120 may include a plurality of electrode tabs. The electrode tab 1130 of the electrode assembly 1120 may be connected to a current collector coupled to an insulator. In FIGS. 11 to 13, the current collector is not illustrated to more clearly show movement of the pins.

In embodiments, a length T2 in the Y-axis direction in which the first pin 1101 is inserted may be greater than or equal to a thickness T1 of the electrode assembly 1120. The thickness T1 of the electrode assembly 1120 may be a thickness in the Y-axis direction.

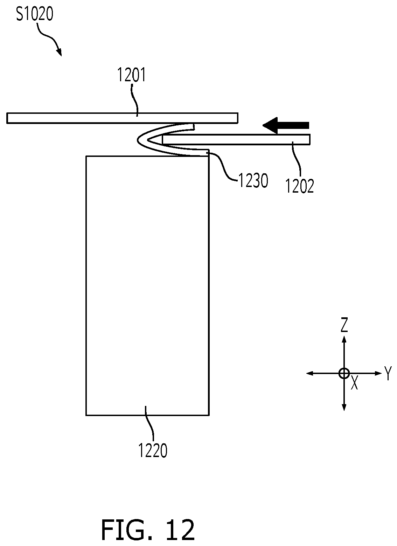

Referring to FIG. 12, after first bending the electrode tab 1230 of the electrode assembly 1220 in the first direction (+Y-axis direction) with a first pin 1201, a portion of the electrode tab 1230 may be secondarily bent in a second direction (-Y-axis direction) with a second pin 1202 (S1020).

The second pin 1202 may be located on a lower side of the first pin 1201. For example, the second pin 1202 may bend a portion of the electrode tab 1230 in the second direction (-Y-axis direction) between the first pin 1201 and the electrode assembly 1220. In FIG. 12, the electrode tab 1230 is illustrated as being singular, but is not limited thereto. For example, the electrode assembly 1220 may include a plurality of electrode tabs. A portion of the plurality of electrode tabs may be secondarily bent by the second pin 1202, and the remaining portion of the plurality of electrode tabs may not be secondarily bent by the second pin 1202.

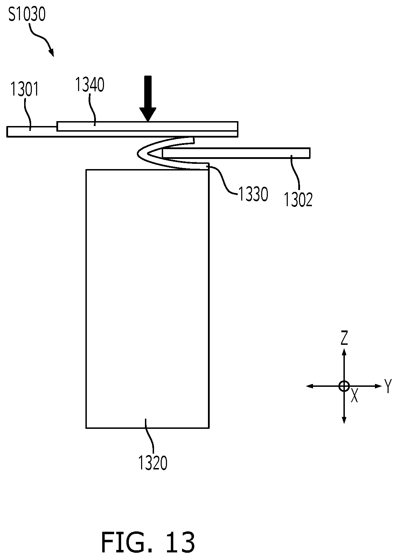

Referring to FIG. 13, after the first and second bending, an insulator 1340 may be lowered and positioned on an upper side of a first pin 1301 (S1030).

After lowering the insulator 1340, the first pin may retreat from the electrode tab through a recess. A width of the first pin may be less than a width of the recess. The second pin may retreat from the electrode tab through the recess. A width of the second pin may be less than the width of the recess. By removing each pin after lowering the insulator 1340, the bent electrode tab may be located inside a sidewall of the insulator.

In FIG. 13, the electrode tab 1330 is illustrated as being singular, but is not limited thereto. For example, the electrode assembly 1320 may include a plurality of electrode tabs.

Although the present disclosure has been described with reference to embodiments and drawings illustrating aspects thereof, the present disclosure is not limited thereto.

## Claims

1. An insulator (240) comprising:
a base part (242,) coupled with a cap assembly (360); and
a plurality of sidewalls (244) bent downwardly and extending from the base part (242), in which an electrode tab (530) is received inside,
wherein at least one of the sidewalls (244) includes a recess (246) in a longitudinal direction.

2. The insulator as claimed in claim 1, wherein a width (L_1a) of the recess (846) is greater than a width (L_1b) of the electrode tab (830).

3. The insulator as claimed in claim 1, wherein a width (L_2a) of the recess (946) is less than a width (L_2b) of the electrode tab (930).

4. The insulator as claimed in any one of the preceding claims, wherein sidewalls (244) facing one another among the sidewalls each include the recess (246).

5. The insulator as claimed in any one of the preceding claims, wherein a lower surface of the base part (242) has a gradient (440_a).

6. The insulator as claimed in any one of the preceding claims, wherein the base part (242) includes at least one opening (248exposing a portion of the electrode tab (530).

7. The insulator as claimed in any one of the preceding claims, wherein the electrode tab (530) is bent in a first direction, and a portion of the electrode tab is bent in a second direction substantially opposite to the first direction.

8. A secondary battery (100) comprising:
an electrode assembly (820) accommodated in a case (110) and including a plurality of electrode tabs (530);
a cap assembly (360) sealing an open surface of the case (110);
a current collector (350) coupled with the cap assembly (360); and
an insulator (240) interposed between the current collector (350) and the electrode assembly (820),
wherein the insulator (240) includes:
a base part (242) coupled with the cap assembly (360); and
a plurality of sidewalls (244) bent downwardly and extending from the base part (242), in which an electrode tab (530) is received inside,
wherein at least one of the sidewalls (244) includes a recess (246) in a longitudinal direction.

9. The secondary battery as claimed in claim 8, wherein the cap assembly (360) includes a cap plate (166) having at least one through-part exposing a portion of the current collector (350).

10. The secondary battery as claimed in claim 9, further comprising a terminal (180_1, 180_2) protruding to an outside of the cap plate (166),
wherein the current collector (350) and the terminal (180_1, 180_2) are fixed by metal joining through the at least one through-part, and a metal joining region (390) is on the current collector and the terminal.

11. The secondary battery as claimed in claim 9 or 10, wherein the insulator (640) is fastened with the cap plate (166).

12. The secondary battery as claimed in any one of the claims 8 to 11, wherein:
the base part (242) includes at least one opening (248) exposing a portion of the electrode tab (530),
the electrode tab (530) and the current collector (350) are fixed by metal joining through the at least one opening (248), and
a metal joining region is on the electrode tab (530) and the current collector (350).

13. A manufacturing method of a secondary battery, comprising:
first bending an electrode tab (1130) in a first direction with a first pin (1101);
second bending a portion of the electrode tab (1230) in a second direction substantially opposite to the first direction with a second pin (1202); and
lowering an insulator (1340) and disposing the insulator on an upper side of the first pin (1101, 1201, 1301),
wherein the insulator (1340) includes:
a base part (242) coupled with a cap assembly (360); and
a plurality of sidewalls (244) bent downwardly and extending from the base part (242), in which the electrode tab (1130) is received inside,
wherein at least one of the sidewalls (244) includes a recess (246) in a third direction substantially perpendicular to the first direction and the second direction.

14. The manufacturing method of a secondary battery as claimed in claim 13, further comprising the first pin (1101) retreating from the electrode tab (1130through the recess (246).

15. The manufacturing method of a secondary battery as claimed in claim 13 or 14, further comprising the second pin (1202) retreating from the electrode tab (1130) through the recess (246).
